# EUROPEAN PATENT APPLICATION

(11) **EP 3 804 900 A1**
(43) Date of publication of application: **14.04.2021**
(21) Application number: 19202130.1
(22) Date of filing: 09.10.2019
(51) Int. Cl.: B23K 20/12, B23K 20/26, B23Q 11/10

(54) **METHOD AND SYSTEM FOR FRICTION SPOT WELDING**

(71) Applicant: Harms & Wende GmbH & Co. KG, 21079 Hamburg (DE); MDT Co. Ltd., Ulsan (KR)
(72) Inventor: Luidhardt, Fritz, 20355 Hamburg (DE); Bui, Nguon-Nhan, 21073 Hamburg (DE); Kim, Won Jun, 44605 ULSAN (KR); Lee, Kwang Weon, 48093 BUSAN (KR)
(74) Representative: Glawe, Delfs, Moll

(57) **Abstract**

The invention pertains to a system and a method for friction spot welding, wherein a welding device (18) comprises a hollow plunger (24), a sleeve (25) arranged coaxially within the hollow plunger (24), and a pin (26) arranged coaxially within the sleeve (25), wherein the welding device (18) further comprises a rotary drive (29) adapted for driving a rotary motion of the sleeve (25) and/or the pin (26) relative to the hollow plunger (24) and a linear drive (30, 31) adapted for driving a linear motion of the sleeve (25) and/or the pin (26) relative to the hollow plunger (24) . After a multitude of welding processes, a lubricant is applied to a section at a distal end of the welding device (18) in a maintenance station (50).

## Description

The invention pertains to a system and method for friction spot welding. The system comprises a welding device, wherein the welding device comprises a hollow plunger, a sleeve arranged coaxially within the hollow plunger, and a pin arranged coaxially within the sleeve. The welding device further comprises a rotary drive adapted for driving a rotary motion of the sleeve and/or the pin relative to the hollow plunger and a linear drive adapted for driving a linear motion of the sleeve and/or the pin relative to the hollow plunger.

The friction spot welding can be utilized to join stacked metal sheets, in particular metal sheets of aluminum materials. A distal end of the welding device can be advanced onto an upper metal sheet, such that a pressure is exerted on the upper metal sheet in an axial direction. The sleeve can be rotated, thereby plastifying the material of the metal sheets such that the material may be displaced under the axial pressure of the sleeve. Space for receiving the displaced material can be provided by a corresponding reverse motion of the pin. The sleeve can be advanced to the lowermost of the metal sheets to be joined. When material of the metal sheets has been plastified to a sufficient depth, the sleeve may be retracted and the pin may be advanced, such that the plastified material of the metal sheets evenly fills out the joint region. After hardening of the material, a spot-shaped joint between metal sheets is created.

During the welding process plastified material may enter between the sleeve and the pin due to the relative motion between the sleeve and the pin, thereby decreasing the tool life of the welding device.

It is an object of the invention to provide a method and system for friction spot welding with an improved tool life for the welding device. The problem is solved with the features of the independent claims. Advantageous embodiments are defined in the dependent claims.

In the inventive method a spot welding step is applied to a stack of metal sheets by rotating a pin and/or a sleeve coaxially within a hollow plunger and by advancing the pin and/or the sleeve into the material of the metal sheets. Another spot welding step or another plurality of spot welding steps is performed. In a maintenance step the pin is advanced relative to the sleeve so that a distal end of the pin protrudes relative to a distal end of the sleeve. Debris is removed from the distal end of the pin. A lubricant is applied to the distal end of the pin.

The invention has realized that a cleaning step for removing debris from the distal end of the pin at the same time may also remove lubricant from the distal end of the welding device. According to the invention lubricant is applied to the distal end of the welding device during the maintenance step. The distal end of the welding device is thus well lubricated before the next spot welding step is performed.

The inventive method may comprise a sequence of spot welding steps and maintenance steps, wherein each maintenance step comprises the inventive maintenance step of removing debris from the distal end of the pin and applying a lubricant to the distal end of the pin. Between two maintenance steps a plurality of spot welding steps can be performed, in particular at least 10 spot welding steps, preferably at least 20 spot welding steps, more preferably at least 50 spot welding steps.

In a preferred embodiment the pin is rotated while debris is removed from the distal end of the pin and/or while the lubricant is applied to the distal end of the pin. This may improve the uniform treatment of the surface of the pin with the lubricant.

It is not excluded from the invention that within the maintenance step the lubricant is applied performed prior to removing debris. In a preferred embodiment the debris is removed first and the lubricant is applied subsequently. The step of removing debris may be performed by directing an air stream to a section at the distal end of the welding device, in particular to the distal end of the pin. In one embodiment of the invention removing of debris and lubricating the distal end of the pin is performed in an integrated step, wherein e.g. a stream of lubricant or a gas stream containing lubricant is directed to the distal, by which debris is removed and lubricant is applied the same time.

The step of applying the lubricant may comprise one or more of: spraying the lubricant, delivering the lubricant by pressurized air, contacting the distal end of the pin with a lubricant source. Contacting the distal end of the pin with a lubricant can be done by e.g. contacting the distal end with a sponge or a tissue that is saturated with the lubricant. It is also possible to dip the distal end of the pin into a source of lubricant. The lubricant may be adapted for use at temperatures up to 200° C, preferably at temperatures up to 300° C, more preferably at temperatures up to 500° C.

In the inventive friction spot welding method a pin and/or a sleeve, arranged coaxially within a hollow plunger, are rotated relative to the hollow plunger. In the maintenance step, lubricant may be applied to any element at the distal end of the welding device, including the pin and/or the sleeve and/or the hollow plunger.

At the beginning or during the maintenance step, the pin and the sleeve may be dislocated in axial direction relative to one another, so that a receiving space between a first sealing gap and a second sealing gap becomes accessible. Areas defining the first and/or the second sealing gap may also become accessible with the relative dislocation between the pin and the sleeve. Lubricant may be applied to the receiving space and/or the areas defining the first sealing gap and/or the areas defining the second sealing gap. At the end or during the maintenance step, the pin and the sleeve may be dislocated in axial direction relative to one another again, so that the receiving space is rearranged within the welding device.

At the beginning or during the maintenance step, the sleeve and the hollow plunger may be dislocated in axial direction relative to one another, so that areas defining a sealing section between the sleeve and the hollow plunger become accessible. Also a second receiving space between the hollow plunger and the sleeve may become accessible. Lubricant may be applied to the areas defining the sealing section and/or to the second receiving space.

The pin and/or the sleeve and/or the hollow plunger may be rotated relative to a maintenance station, while at the same time applying lubricant to the distal end of the welding device.

The maintenance station may comprise a lubricant storage unit, which may contain a lubricant. Alternatively, lubricant may be supplied to the maintenance station from an external source. The lubricant may be heat resistant lubricant; the lubricant may be adapted for use at temperatures up to 200° C, preferably at temperatures up to 300° C, more preferably at temperatures up to 500° C. The lubricant may be a fluid, a semifluid, a paste, or a solid. In particular, the lubricant may be one of oil, emulsion, fat, semifluid grease, or cooling lubricant. It is also possible to combine different kinds of lubricant.

The welding device may be moved from a welding site to the maintenance station by a machine tool with a driving device; the machine tool and driving device may be the same machine tool and driving device as utilized in positioning the welding device against the surface of the metal sheets at the beginning of a welding process. The maintenance station may comprise a lubrication chamber to receive the welding device for lubrication. The lubrication chamber may comprise a receptive opening, preferably at the top of the chamber; the distal end of the welding device may be inserted through the receptive opening into the lubrication chamber with the distal end pointing downwards. Alternatively, the lubrication chamber may comprise a receptive opening to one side of the chamber; in this case the distal end of the welding device may be inserted in a lateral direction, with the axial direction horizontally aligned. Vector combinations between vertical and horizontal orientations of the lubrication chamber and welding device are possible; for example the lubrication chamber may have a receptive opening receiving the welding device in a 45° angle.

The lubrication chamber may have different geometrical shapes; for example the lubrication chamber may have a cylindrical shape, wherein the cylinder axis may be aligned with the axial direction of the welding device. The lubrication chamber may be open or closed towards any direction; a lubrication chamber without any physical walls is also possible, in which case the term "chamber" refers to the space immediately surrounding the lubrication site. The bottom of the chamber may be closed and serve as a basin to collect excess lubricant.

The lubrication chamber may comprise at least one lubricant application unit; preferably, the number of lubrication application units lies between 1 and 10, further preferably, the number of lubrication application units is 2. Preferably, the lubricant application unit is a jet nozzle. The maintenance station may furthermore comprise a lubricant feed unit. The lubricant feed unit may comprise a lubricant feed pump and a lubricant feed pipe. The lubricant feed unit may feed lubricant from the lubricant storage unit to the lubricant application unit, so that liquid lubricant may e.g. be sprayed onto the welding device, whereas pasty lubricant may e.g. be squeezed onto the welding device. Feeding and/or application of the lubricant may be supported by a carrier medium. The carrier medium may be a liquid or a gas; preferably the carrier medium is air. The carrier medium may cooperate with the lubricant feed pump or with a separate pump; it is also possible to combine the carrier medium with an air blower or a compressed air reservoir. The carrier medium may be mixed into the lubricant feed pipe at or close to the lubricant storage unit, so that the carrier medium carries the lubricant through the lubricant feed pipe to the application unit. Alternatively the carrier medium may be mixed into the lubricant shortly before or at the lubricant application unit, so that the carrier medium may propel and/or disperse the lubricant to cover the welding device with an even coat.

Alternatively, the lubricant application unit may comprise a sponge or a brush. The sponge or brush may be kept saturated with lubricant via the lubricant feed unit. Further alternatively, the lubricant application unit may be a bath of liquid lubricant or a mass of pasty or solid lubricant, wherein the bath or the mass may be resupplied via the lubricant feed unit. If the lubricant application unit is not adapted to propel the lubricant towards the welding device (as may be the case with a sponge, a brush, a bath or a block), the lubricant application unit may be moved relative to the welding device, to lubricate the welding device by establishing direct physical contact between the lubricant application unit and the welding device. As an example, a section at the distal end of the welding device may be dipped into a bath of liquid lubricant. A machine tool with a driving device may drive the necessary relative movements between the welding device and the lubricant application unit; the machine tool and driving device may be the same machine tool and driving device as utilized in positioning the welding device against the surface of the metal sheets at the beginning of a welding process.

The one or more lubricant application units may be arranged in the lubrication chamber. The lubricant application units may be arranged to lubricate a section at the distal end of the welding device from at least one radial direction; in other words, the lubricant may be applied to the circumference of the section at the distal end of the welding device. If the welding device is arranged vertically in the lubrication chamber and if the lubricant application units are jet nozzles, the one or more jet nozzles may be arranged to point towards a section at the distal end of the welding device in an at least partially horizontal discharge direction. If the welding device sits in the lubrication chamber with the axial direction along the horizontal, lubricant may e.g. be dripped onto a section at the distal end of the welding device from a lubricant application unit disposed above the welding device. During lubrication, the welding device, or separate components of the welding device, may be rotated around the axial direction relative to the lubricant application units. The rotary drive of the welding device may be utilized to drive rotation of the pin and/or the sleeve relative to the lubricant application units. In this way, the welding device is lubricated evenly from all the radial directions. Alternatively, the one or more lubricant application units may be arranged to lubricate the welding device from an axial direction; in other words, the lubricant may be applied to the abutting face at the distal end of the welding device.

The inventive system may comprise a cleaning device, adapted for removing debris from the distal end of the pin. The cleaning device and the lubrication device may be integrated into a common housing or be separate from one another. Debris in the form of material from the metal sheets that has penetrated between the pin and the sleeve may be removed by means of a cleaning medium. The cleaning medium may be a gas; the cleaning medium may be identical to the carrier medium for the lubricant; in particular, the cleaning medium may be air. A flow of cleaning medium may be directed towards the welding device via cleaning jet nozzles. The cleaning jet nozzles may be separate from or identical to the ones serving as lubricant application units. Alternative cleaning steps are possible, comprising e.g. brushing and/or application of a fluid.

In an exemplary embodiment, the maintenance station may comprise an even total number of between 2 and 10, preferably of 4 lubricant jet nozzles and cleaning jet nozzles. The lubricant jet nozzles and cleaning jet nozzles may be arranged towards the distal end of the welding device when the welding device is arranged within the maintenance station. One half of the lubricant jet nozzles and cleaning jet nozzles may be cleaning jet nozzles adapted to discharge cleaning medium and the other half of the jet nozzles may adapted to discharge lubricant; the cleaning jet nozzles may be arranged opposite one another in pairs and the lubricant jet nozzles may be arranged opposite one another in pairs. The lubricant jet nozzles and cleaning jet nozzles may be arranged in uniform intervals along the circumference of a circle, wherein the welding device may be placed in the middle of the circle for lubrication. The discharge direction of the lubricant jet nozzles and the cleaning jet nozzles may be substantially horizontal, whereas the welding device may arranged vertically within the maintenance station.

The inventive system may comprise a control unit adapted for controlling the components of the welding device to automatically perform a part of the steps or all of the steps of the welding process are performed automatically. The control unit may be adapted to control the machine tool to position the welding device relative to the metal sheets to be joined. The control unit may be adapted to control the rotary drive and/or the linear drives. Furthermore, the control unit may be adapted to control the maintenance station and/or to position the welding device within the maintenance station.

The control unit can be configured to initiate a cleaning process and/or a lubrication process after a multitude of welding processes. The cleaning process and/or the lubrication process may comprise one or several of the following steps which may be performed in succession or in parallel: moving the welding device into a cleaning position and/or a lubrication position; performing an axial dislocation between the pin and the sleeve, so that a distal end of the pin becomes accessible; removing debris from the distal end of the pin; lubricating an element at the distal end of the welding device; lubricating the distal end of the pin; rotating the pin and/or the sleeve relative to the maintenance station while controlling the lubricant application units to apply lubricant to the welding device; performing an axial dislocation between the pin and the sleeve, so that the pin is retracted into the sleeve.

During the welding process the hollow plunger can maintain a fixed axial position. The sleeve and/or the pin can be rotated relative to the hollow plunger. The sleeve and the pin can be rotated at equal rotational speed or independent of one another. When the material of the metal sheets begins to plastify under the rotational friction, the sleeve may be advanced so that the sleeve penetrates into the material of the metal sheets. In parallel to this, the pin may be retracted for receiving the displaced material. When the sleeve has advanced to the lowermost of the metal sheets to be joined, the linear motion may be reversed, in that the sleeve is retracted and the pin is advanced forward in parallel. The welding process can end with the sleeve and the pin resuming the same axial position as in the initial condition.

For preventing plastified material from penetrating between the pin and the sleeve a sealing gap can be arranged at the distal end of the welding device between the pin and the sleeve. A receiving space can be formed between the pin and the sleeve adjacent the sealing gap. In one embodiment a first sealing gap and a second sealing gap are provided between the sleeve and the pin. A receiving space is formed between the first sealing gap and the second sealing gap for receiving debris from plastified material that penetrates through the first sealing gap. The material may be removed from the receiving space in regular intervals, e.g. by dislocating the pin and the sleeve relative to one another in an axial direction, so that the receiving space is made accessible from the outside.

The welding device may extend between a proximal end and a distal end. The inventive system may comprise a frame. The proximal end of the welding device may be suspended in the frame. The rotary drive and/or the linear drive may be adapted for driving a motion of the sleeve and/or the pin relative to the frame. The hollow plunger may be in a fixed position with respect to the frame. The inventive system may comprise a supporting structure and a machine tool, wherein the machine tool comprises a driving device to move the frame of the welding device relative to the supporting structure in a way that a distal end of the hollow plunger is positioned against a surface of a stack of metal sheets to be joined. The inventive system may comprise a counter support, wherein the counter support comprises a bearing surface opposite the distal end of the hollow plunger. The welding device, the frame and the counter support may form a welding unit; the welding unit may comprise a drive to move the welding device and the counter support relative to one another in axial direction. The distal end of the hollow plunger may have an abutting face configured to bear on the surface of the metal sheets to be joined. The abutting face may be perpendicular with an axial direction, wherein the axial direction extends between a proximal end and the distal end of the hollow plunger. An axis of rotary motion of the sleeve and/or the pin may extend parallel to the axial direction. A linear motion of the sleeve and/or the pin may be parallel with the axial direction. The welding device can comprise a first linear drive and a second linear drive, such that the sleeve and the pin may be moved along the axial direction independently of one another. The linear drives may be configured, so that the sleeve and the pin may be dislocated relative to one another so far, that the receiving space becomes accessible from the outside.

The first sealing gap may be located at the distal end of the welding device. The second sealing gap may be located in a proximal direction as viewed from the first sealing gap, such that the first sealing gap and second sealing gap follow in sequence along the axial direction. The sealing gaps may extend in circumferential direction along the outer circumference of the pin and the inner circumference of the sleeve respectively. A radial distance between the inner surface of the sleeve and the outer surface of the pin, wherein both surfaces enclose the sealing gap, is so small that penetration of plastified material into the sealing gap is prevented as far as possible. Preferentially, in particular with the first sealing gap, the radial distance is as small as technically possible. A radial distance at the second sealing gap may be consistent with the radial distance at the first sealing gap. A larger radial distance may be acceptable at the second sealing gap, as the demand on sealing performance is lower with the second sealing gap than with the first sealing gap.

In the region of the receiving space, enclosed between the first sealing gap and the second sealing gap, the radial distance between an outer circumference of the pin and an inner circumference of the sleeve is larger than at the sealing gaps, thereby constituting a receiving space for receiving the plastified material penetrating through the first sealing gap. Contrary to the first sealing gap, the material is not under pressure in the region of the second sealing gap, so that there is no further advancing of penetrating material into the interior of the welding device, past the second sealing gap.

The sleeve may have a cylindrically shaped inner surface in the axial region of the sealing gaps. The structures defining the first sealing gap, the second sealing gap, and the receiving space, may be located at the outer circumference of the pin. The pin may exhibit a first sealing protrusion for the first sealing gap, wherein the sealing protrusion protrudes radially outward relative to the receiving space. A corresponding second sealing protrusion may be provided for the second sealing gap. The distal end of the first sealing protrusion may be located at the distal end of the pin. In particular the pin may be shaped such that the first sealing protrusion is part of a uniform abutment face of the pin. The abutment face may be plane and at right angles with the axial direction.

An opposite configuration is possible, wherein the pin has a cylindrically shaped outer surface in the axial region of the sealing gaps, and the structures defining the first sealing gap, the second sealing gap, and the receiving space are located at the inner circumference of the sleeve.

The axial length of the receiving space may be larger, e.g. by a factor of two, preferably by a factor of four, then the axial length of the first sealing gap. It depends on the length of the receiving space, how far the pin and the sleeve are to be dislocated relative to one another in axial direction, to make the receiving space freely accessible from the outside; it is therefore advantageous for the axial length of the receiving space not to be overly large. As an example the welding device may be construed such that the length of the receiving space exceeds the axial length of the first sealing gap by not more than a factor of 50, preferably by not more than a factor of 20, further preferably by not more than a factor of 10. As an example the axial length of the receiving space may be between 2 mm and 50 mm, preferably between 4 mm and 20 mm. The axial distance between the outer wall of the pin and the inner wall of the sleeve in the region of the receiving space may e.g. lie between 0.1 mm and 1 mm, preferably between 0.2 mm and 0.5 mm.

At its distal end, the pin may have an abutting face which may be perpendicular to the axial direction. The welding device can comprise an initial condition, wherein the abutting face of the pin is flush with the abutting face of the sleeve and wherein the abutting face of the sleeve is flush with the abutting face of the hollow plunger. In this initial condition, the distal end of the welding device may be positioned to bear upon the metal sheets to be worked on, at the beginning of a welding process.

The method may be upgraded with features described in relation to the inventive system. The system may be upgraded with features described in relation to the inventive method.

The invention will be described with reference to the attached drawings, on the basis of exemplary, advantageous embodiments. Shown are:
- Figure 1:: a schematic side view of an inventive system;
- Figure 2:: a cross-sectional view of an inventive welding device;
- Figure 3:: schematic cross-sectional views of the inventive welding device at three successive stages of a welding process;
- Figure 4:: a cross-sectional view of a distal end of the inventive welding device;
- Figure 5:: a cross-sectional view of the distal end of a hollow plunger of the inventive welding device;
- Figure 6:: a cross-sectional view of the inventive welding device in a maintenance mode;
- Figure 7:: a schematic cross-section through the welding device arranged within the maintenance station;
- Figure 8:: elements of the maintenance station;
- Figure 9:: elements of the maintenance station in a side view;

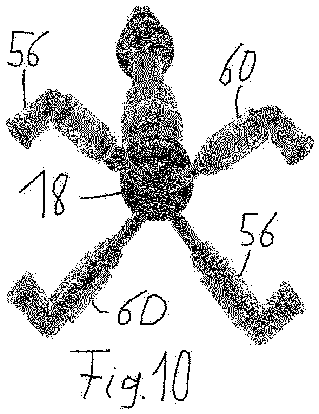

- Figure 10:: elements of the maintenance station in a different perspective.

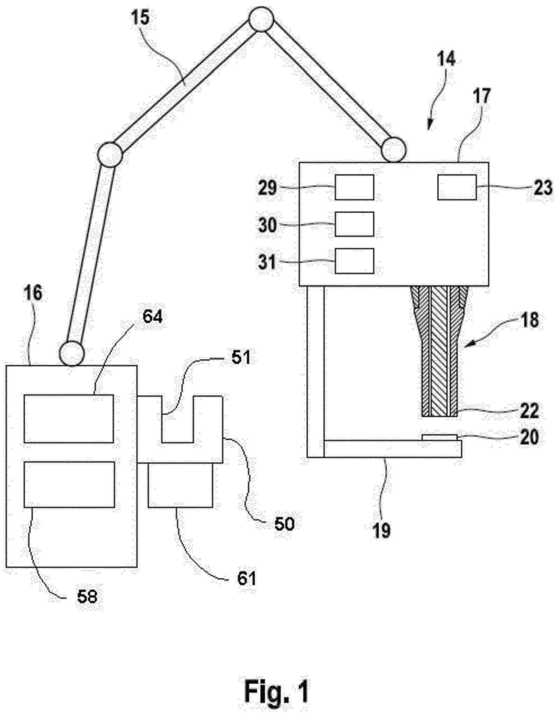

Figure 1 shows an embodiment of the inventive system, wherein a welding unit 14 is connected to a supporting structure 16 via a machine tool 15. With the machine tool 15 and the driving device 64, the welding unit 14 may be moved relative to the supporting structure 16.

The welding unit 14 comprises a frame 17, to which a welding device 18 and a counter support 19 are secured. A bearing surface 20 of the counter support 19 lies opposite a distal end 22 of the welding device 18. To join a stack of aluminum metal sheets (not shown), the welding unit 14 is moved via the machine tool 15 in such a way, that the aluminum metal sheets are enclosed between the welding device 18 and the counter support 19. With a drive 23, the welding device 18 and the counter support 19 are advanced toward the aluminum metal sheets, until the distal end 22 of the welding device 18 and the bearing surface 20 of the counter support 19 exert pressure onto the aluminum metal sheets from opposite directions and the aluminum metal sheets are clamped between the welding device 18 and the counter support 19. The control unit 58 controls the cooperation of components in the inventive system.

The inventive system comprises a maintenance station 50 with a cleaning and lubrication chamber 51 and a lubricant storage unit 61. The distal end 22 of the welding device 18 can be inserted into the cleaning and lubrication chamber 51 to lubricate the welding device 18 after a multitude of welding processes. The cleaning and lubrication process will be described in detail further below.

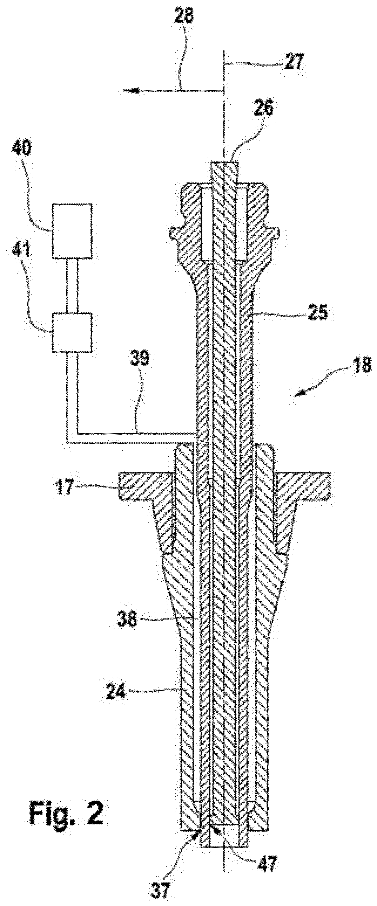

As shown in the magnified representation in figure 2, the welding device 18 comprises a hollow plunger 24, a sleeve 25 and a pin 26, which are aligned coaxially with an axis 27. The axis 27 defines the axial direction of the welding unit 14. A radial direction 28 is perpendicular with the axial direction 27.

The hollow plunger 24 is rigidly connected to the frame 17 of the welding unit 14. The sleeve 25 is mounted displaceably in axial direction and rotatably around the axis 27, relative to the hollow plunger 24. The pin 26 is mounted displaceably in axial direction relative to the sleeve 25. According to figure 1, the welding unit 14 comprises a rotary drive 29 adapted to set the sleeve 25 and the pin 26 into a joint rotary motion relative to the hollow plunger 24. A first linear drive 30 is adapted to drive a relative linear motion in axial direction between the sleeve 25 and the hollow plunger 24. A second linear drive 31 is adapted to drive a relative linear motion in axial direction between the pin 26 and the sleeve 25.

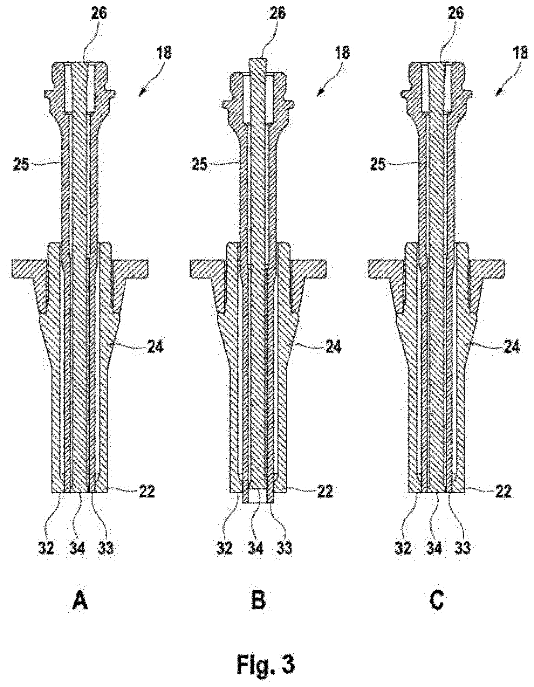

In figure 3 three successive stages of an inventive welding process are illustrated: At the beginning of the welding process the welding device 18 and the counter support 19 have are bearing on the aluminum metal sheets from opposite directions and the welding device 18 is in a an initial condition. In the initial condition, an abutting face 32 of the hollow plunger 24, an abutting face 33 of the sleeve 25, and an abutting face 34 of the pin 26 lie flush and within a common plane at the distal end 22 of the welding device 18 (figure 3A). The abutting faces 32, 33, 34 bear on the surface of a stack of aluminum metal sheets (not shown) to be joined.

The sleeve 25 and the pin 26 are rotated with the rotary drive 29, such that the aluminum material transitions into a plastified condition under the frictional heat created at the abutting faces 33, 34. In parallel to the rotary motion, the sleeve 25 is advanced forward with the first linear drive 30, so that the distal end of the sleeve 25 penetrates the metal sheets and displaces the aluminum material. A space for receiving the displaced aluminum material is provided by retracting pin 26 with the second linear drive 31 at the same time. The sleeve 25 advances into the material, through the stack of aluminum metal sheets, until it reaches the lowermost of the metal sheets to be joined. The stage in which the sleeve 25 is maximally extended and the pin 26 is maximally retracted, is shown in figure 3B.

Subsequent to the position shown in figure 3B, the linear motions are reversed, so that the sleeve 25 is retracted and the pin 26 is advanced forward, while maintaining the rotary motion. After the sleeve 25 and the pin 26 have resumed their position according to the initial condition (figure 3C), the rotary motion is stopped, and the welding device 18 as well as the counter support 19 are retracted from the surface of the metal sheets. After the welding process, the aluminum material of the metal sheets, which has temporarily transitioned into a plastified condition, hardens to constitute a spot-shaped welding joint.

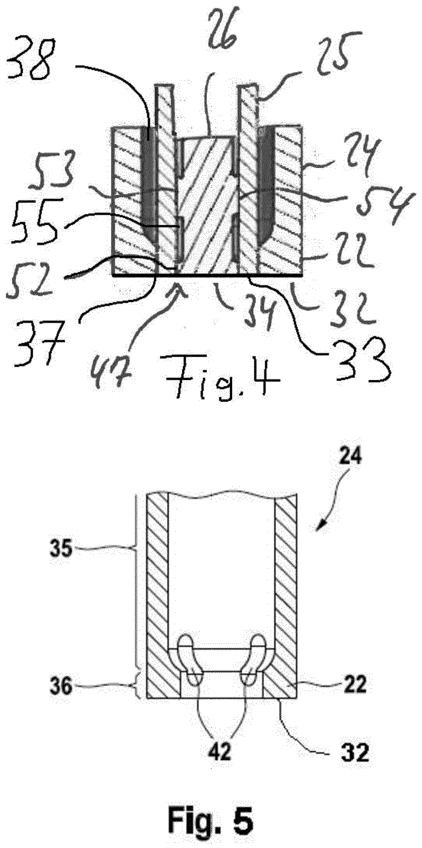

As shown in the magnified representation of figure 4, sleeve 25 has a cylindrical inner surface which extends around the pin 26. The outer surface of the pin 25 is provided with a first sealing protrusion 52 and a second sealing protrusion 53. The inner diameter of the sleeve 25 is dimensioned to match the outer diameter of the sealing protrusions 52, 53. The inner surface of the sleeve 25 surrounds the outer circumference of the sealing protrusions 52, 53 at a minimal radial distance, such that sleeve 25 forms a first sealing gap 47 with the first sealing protrusion 52 and a second sealing gap 54 with the second sealing protrusion 53. The first sealing gap 47 is dimensioned to prevent the plastified aluminum material from penetrating as far as possible. Between the first sealing protrusion 52 and the second sealing protrusion 53, as well as in a proximal direction as viewed from the second sealing protrusion 53, the pin 26 has a smaller outer diameter, such that a ring-shaped space is enclosed between the inner surface of the sleeve 25 and the outer surface of the pin 26. The ring-shaped room between the first sealing protrusion 52 and second sealing protrusion 53 forms a receiving space 55 within the meaning of the invention.

As shown in 5, the hollow plunger 24 comprises a receiving section 35 and a sealing section 36. The hollow plunger 24 has a larger inner diameter in the receiving section 35 than in the sealing section 36. As shown in figure 4, the inner diameter of the sealing section 36 is dimensioned to match the outer diameter of the sleeve 25. Within the sealing section the hollow plunger 24 therefore surrounds the outer circumference of the sleeve 25 at a minimal radial distance. In this way, a third sealing gap 37 is enclosed between the sleeve 25 and the sealing section 36 of the hollow plunger 24. In the receiving section 35, a ring-shaped room is enclosed between the inner wall of the hollow plunger 24 and the outer wall of the sleeve 25.

As shown in figure 2, the second receiving section 35 at the same time forms a section of an air duct 39 which extends from an air blower 40, via a cooling mechanism 41, to the second receiving space 38. According to figure 5, the hollow plunger 24 is provided with through-holes 42 which extend in radial direction through the wall of the hollow plunger 24 near its distal end 32. The through-holes 42 form an outlet of the air duct 39. A total of four through-holes 42 are arranged along the circumference of the hollow plunger 24 in uniform intervals, of which two through-holes 42 are visible in figure 5.

With respect to the axial direction 27, the through holes 42 overlap with the sealing section 36 as well as with the receiving section 35 of the hollow plunger. In particular the through holes 42 extend across the rounded contour at the transition region between the receiving section 35 and the sealing section 36.

The third sealing gap 37 between the hollow plunger 24 and the sleeve 25 cannot fully prevent the plastified aluminum material from penetrating. The air flow in the air duct 39 contributes in bringing about a quick cooling of aluminum material penetrating the third sealing gap 37. By virtue of the overlap between the through-holes 42 and the sealing section 36, the air flow may have a cooling effect in the immediate vicinity of the third sealing gap 37. By virtue of the simultaneous shearing motion with rotation of the sleeve 25 relative to the hollow plunger 24, the aluminum material is dissected into small particles during cooling. The particles may be discharged from the welding device 18 together with the air flow, via the through-holes 42. Herein, the aluminum material and the air flow may carry lubricant out of the welding device 18, which may lead to lubricant depletion in the welding device 18 over a multitude of welding processes.

Same as the third sealing gap 37, the first sealing gap 47 between the sleeve 25 and the first sealing protrusion 52 of the pin 26 cannot fully prevent plastified aluminum material from penetrating. Aluminum material which has penetrated through the first sealing gap 47, accumulates in the receiving space 55 and is detained from advancing further into the interior of the welding device 18 by the second sealing protrusion 53. Different from the receiving space 38 between the hollow plunger 24 and the sleeve 25, there are no provisions to discharge any material which has penetrated the receiving space between the sleeve 25 and the pin 26, during normal operation.

Instead, the aluminum material is collected in the receiving space 55 over the course of a plurality of welding processes. To remove the aluminum material, welding is interrupted and the welding device 18 is subjected to a maintenance step.

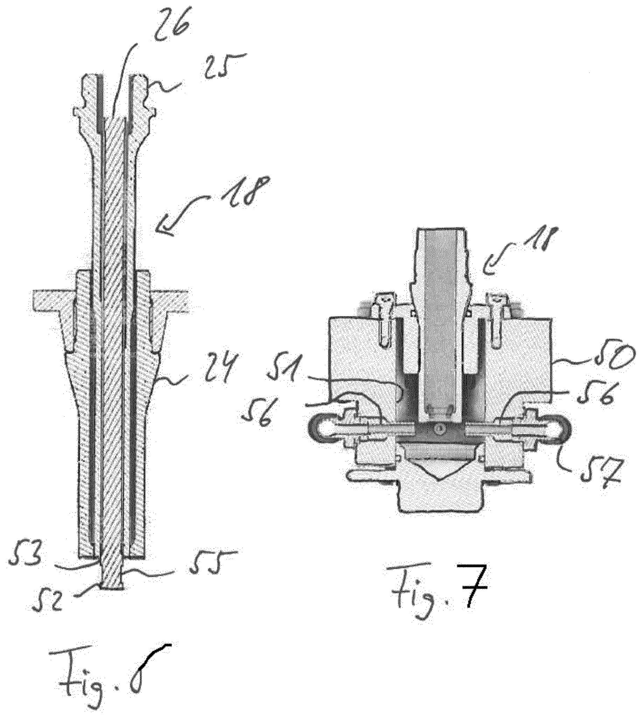

As shown in figure 6, pin 26 is advanced relative to the sleeve 25 in distal direction, until the second sealing protrusion 53 overlaps with the distal end of the sleeve 25, so that the receiving space 55 becomes accessible from the outside for maintenance; this configuration of the welding device 18 is called maintenance mode.

The maintenance step is performed in the maintenance station 50. For this, the counter support 19 is pivoted away, so that the distal end of the welding device 18 may be inserted into the cleaning and lubrication chamber 51. Figure 7 shows a schematic view of the welding device 18 being located in the maintenance station 50, wherein jet nozzles 56, connected to lubricant feed pipes 57, point into the cleaning an lubrication chamber 51.

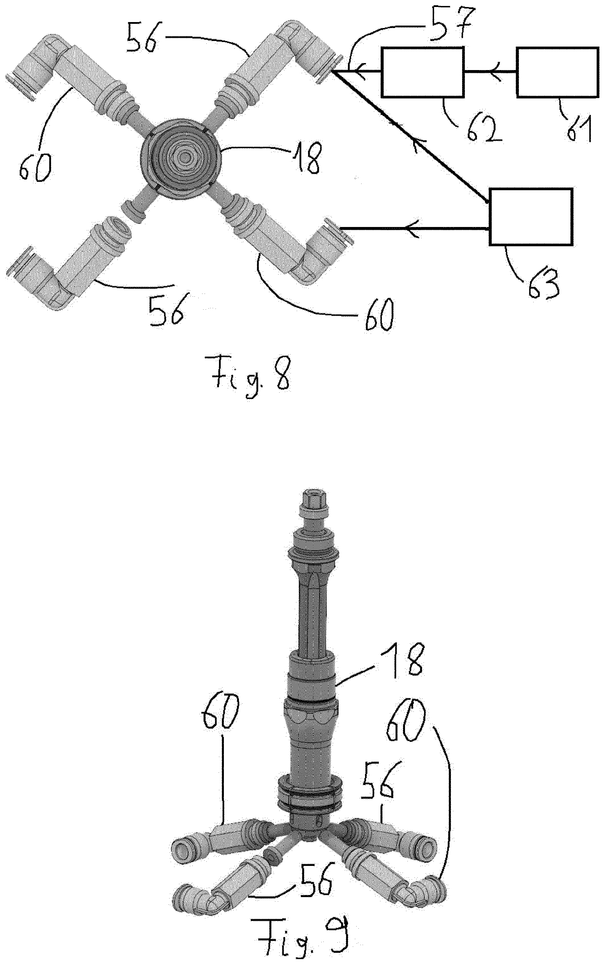

According to the embodiment shown in figure 8, two lubricant jet nozzles 56 and two cleaning jet nozzles 60 are provided, pointing radially inward and arranged in uniform intervals along the circumference of the cleaning and lubrication chamber 51. The lubricant jet nozzles 56 are connected to a lubricant feed pipe 57 feeding oil pumped by a feed pump 62 from a lubricant storage unit 61; at the jet nozzles 56, air from an air pump 63 is mixed into the oil, creating a misty dispersion of air and oil to lubricate the welding device 18. The cleaning jet nozzles 50 are connected to the air pump 63 to direct an air flow towards the welding device 18. The lubricant jet nozzles 56 and cleaning jet nozzles 60 are arranged to point towards the receiving space 55 which is accessible from the outside when the welding device is in maintenance mode.

In a cleaning step, an air flow, generated by the air pump and directed towards the receiving space via the cleaning jet nozzles, takes up the aluminum material accumulated in the receiving space 55 and removes it from the welding device 18. The aluminum material may bind some of the lubricant between the sleeve 25 and the pin 26, which is then removed from the welding device together with the air flow and the aluminum material. The air flow may also take up lubricant from the region of the first sealing gap 47 and the second sealing gap 54. The cleaning step may deplete the whole welding device 18 of lubricant.

Immediately after the cleaning step a lubrication step is performed, wherein oil is pumped to the lubricant jet nozzles 56 and dispersed in air from the air pump 63. The dispersed oil lubricates the receiving space 55 as well as first and second sealing protrusions 52, 53 at the pin 26.

During cleaning and lubrication, the pin 26 may be rotated, so that the distal end of the pin 26 is cleaned and lubricated evenly from all radial directions.

After the receiving space has been cleaned from debris, the pin 25 is retracted so that the welding device 18 is ready for a multitude of further welding processes.

## Claims

1. Method for friction spot welding, comprising the steps:
a. spot welding a stack of metal sheets by rotating a pin (26) and/or a sleeve (25) coaxially within a hollow cylinder (24) and by advancing the pin (26) and/or the sleeve (25) into the material of the metal sheets;
b. repeating step a.)
c. advancing the pin (26) relative to the sleeve (25) so that a distal end (22) of the pin (26) protrudes relative to a distal end of the sleeve (25);
d. removing debris from the distal end (22) of the pin (26) ;
e. applying a lubricant to the distal end (22) of the pin (26);

2. Method according to claim 1, wherein step a.) is repeated at least 10 times, preferably at least 20 times, more preferably at least 50 times.

3. Method according to claim 1 or 2, comprising a sequence of spot welding steps and maintenance steps, wherein between each two maintenance steps at least 10, preferably at least 20, more preferably at least 50 spot welding steps are performed.

4. Method according to any of claims 1 to 3, wherein the step of removing debris is performed prior to the step of applying a lubricant.

5. Method according to any of claims 1 to 4, wherein the pin (26) is rotated while debris is removed from the distal end (22) of the pin (26) and/or while the lubricant is applied to the distal end (22) of the pin (26).

6. Method according to any one of claims 1 to 5, wherein the step of applying the lubricant comprises one or more of spraying the lubricant, delivering the lubricant by pressurized air, contacting the distal end (22) of the pin (26) with a lubricant source.

7. Method according to any of claims 1 to 6, wherein the lubricant is adapted for use at temperatures up to 200° C, preferably at temperatures up to 300° C, more preferably at temperatures up to 500° C.

8. Method according to any one of claims 1 to 5, wherein the step of applying lubricant is performed in a maintenance station (50).

9. Method according to any of claims 1 to 6, wherein a driving device is provided for driving a welding device comprising the hollow cylinder (24), the sleeve (24) and the pin (26) to the maintenance station (50) under the control of a control unit.

10. System for friction spot welding, comprising a welding device (18) and a maintenance station (50), wherein the welding device (18) comprises a hollow plunger (24), a sleeve (25) arranged coaxially within the plunger (24), and a pin (26) arranged coaxially within the sleeve (25), wherein the welding device (18) further comprises a rotary drive (29) adapted for driving a rotary motion of the sleeve (25) and/or the pin (26) relative to the hollow plunger (24) and a linear drive (30, 31) adapted for driving a linear motion of the sleeve (25) and/or the pin (26) relative to the plunger (24), and wherein the maintenance station(50) is adapted for applying a lubricant to a distal end (22) of the pin (26).

11. System according to claim 10, wherein the lubrication station (50) comprises a lubrication chamber to receive the welding device (18) for lubrication, wherein the lubrication station (50) comprises at least one lubricant application unit (56).

12. System according to claims 10 or 11, wherein the lubricant application unit (56) comprises a lubricant jet nozzle (56) .

13. System according to any one of claims 10 to 12, wherein the maintenance station comprises a cleaning device (50), adapted for cleaning the distal (22) end of the pin (26).

14. System according to any one of claims 10 to 13, wherein the cleaning device is integrally combined with the lubrication device within a common housing.
